# EUROPEAN PATENT SPECIFICATION

(11) **EP 3 876 866 B1**
(45) Date of publication and mention of the grant of the patent: **10.07.2024**
(21) Application number: 19848244.0
(22) Date of filing: 07.11.2019
(51) Int. Cl.: A61C 8/00, A61C 13/225, A61C 13/34

(54) **A DENTAL PROSTHESIS**
ZAHNPROTHESE
PROTHÈSE DENTAIRE

(30) Priority: 07.11.2018 AU 2018904243
(43) Date of publication of application: 15.09.2021
(73) Proprietor: Implant Solutions Pty Ltd, Mulgrave, VIC 3170 (AU)
(72) Inventor: TUCKMAN, Michael, Mulgrave, Victoria 3170 (AU)
(74) Representative: Fish & Richardson P.C.
(86) International application number: PCT/AU2019/051222
(87) International publication number: WO 2020/028958

(56) References cited:
- WO-A1-97/49351
- US-A- 4 767 328
- US-A1- 2017 348 077
- US-A1- 2018 000 568
- US-A1- 2018 008 384
- US-A1- 2018 250 102
- US-B2- 9 566 138

## Description

### Field of the invention

The present invention relates to a dental prosthesis for use in replacing teeth and associated structures for a patient. The invention also concerns a method for designing a dental prosthesis.

### Background of the invention

Dentists are continuously searching for methods in which they can provide aesthetic and durable prostheses for their patients. Dentists are also looking for a cost effective and time efficient manner in which to obtain this result.

Traditional acrylic processed dental hybrid restorations utilise a milled or cast framework/bar where individual artificial teeth are retained to the framework by processed acrylic. This dental prosthesis is produced by first manufacturing the bar, for example out of titanium, and manually attaching denture teeth to the bar using processed acrylic to hold all the parts together. This process requires a high level of skill and significant time in the laboratory. It is not uncommon for the artificial teeth of the traditional hybrids to break and fracture due to the occlusal forces of the patient exceeding the strength of the acrylic. Such breakages require replacement artificial teeth to be prepared for fitment to the bar. This can be particularly time consuming as no digital record of the individual teeth exists in this traditional process, which generally means that the prosthesis will have to be re-made.

One example of a dental prosthesis is provided in WO2017/156405 to Cagenix, Inc. This document discloses the use of a bridging structure having a plurality of support posts for receiving individual teeth, or for receiving a veneering overlay structure. US 2018/0008384 A1 describes a dental framework and prosthesis. WO 97/49351 describes a dental prosthesis system. US 2018/0000568 A1 describes a dental bridge system.

It is desirable to provide an improved dental prosthesis, or an alternative dental prosthesis to those known in the art.

Reference to any prior art in this specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

With the improvement in CAD/CAM software, the present inventors have developed a new two-part prosthesis, and a method of producing such a prosthesis, which improves various characteristics of traditional dental prostheses and provides improved reproducibility of components thereof.

The present invention is defined by the independent claims. The dependent claims depict additional embodiments of the invention. In one aspect, the present invention provides a dental prosthesis, comprising: an implant frame configured to be fixed into the mouth of a patient to support replacement of two or more teeth of the patient, the implant frame having an exterior surface defining a first engagement profile; and an overlay adapted to be secured to the implant frame and to provide mounting of, the two or more teeth, the overlay having an internal cavity that extends along a substantial length of the overlay, wherein the internal cavity defines a second engagement profile, wherein the second engagement profile is complementary to the first engagement profile, thereby allowing fitment of a substantial portion of the exterior surface of the implant frame within the internal cavity wherein the implant frame is in the form of an arched bar and has a cross-sectional form of an inverted T profile, the inverted T profile having a substantially horizontal portion extending in a transverse direction and a substantially vertical portion extending generally perpendicularly thereto, wherein the substantially horizontal portion comprises a lingual ledge that provides a landing ledge for the overlay when it is fitted on the implant frame, wherein the substantially vertical portion comprises a leading occlusal edge in an anterior part of the implant frame, which supports at least a portion of the overlay, and wherein the leading occlusal edge has an anterior lean with an angle of up to about 30 degrees from the lingual ledge, and wherein the overlay is securely fastened to the implant frame by a dental cement or glue.

Advantageously, the second engagement profile being complementary of the first engagement profile provides a dental prosthesis with an intimate fit between the implant frame and the overlay. This intimate fit aids the production of a more durable dental prosthesis, which can outlast dental prostheses made in the more conventional manner. The inventors have found that a dental prosthesis in accordance with the invention can be up to 40% stronger than conventional dental prostheses.

A further significant advantage arises with respect to post-processing, whereby fitting of the overlay onto the implant frame after production is a considerably simpler process. Reproducibility of the dental prosthesis is also enhanced as not only is the implant frame provided digitally in CAD software, but the overlay can similarly be stored digitally in CAD software. In accordance with the invention, an accurate representation of the overlay can be achieved, as the internal cavity of the overlay can be produced by, in one example, substantially inverting the external geometry of the implant frame (producing the cavity by utilising a complementary profile to that of the implant frame). Having a digital record of both the implant frame and the overlay can markedly improve ease and economy of manufacture of the dental prosthesis. For example, using CAD/CAM software, both the implant frame and the overlay can be manufactured at the same time.

A further benefit arises from the ease of replacement of the overlay or implant frame, should either be damaged. As noted above, it is conventional to provide individual teeth, which are then attached to an implant structure. In the event of a damaged tooth, it is then necessary to produce a new tooth or an entire dental prosthesis, and the lack of any digital record of the individual teeth makes such repair a significantly more time consuming, inconvenient and expensive exercise. The present invention provides a dental prosthesis wherein the overlay can be easily remanufactured directly from the overlay digital record.

Another advantage of the invention is it allows for greater flexibility in the manufacture of the overlay, as the implant frame can effectively act as a universal frame, able to accommodate numerous different overlay designs. The overlays can all be designed with an engagement profile which is substantially an inversion of the engagement profile of the implant frame. This means that, for example, an aesthetically different overlay may be provided on the same implant frame. The overlay can also be upgraded by manufacturing it from a different material, for example, a structurally stronger material. This can be achieved by simply manufacturing the overlay, using the same or an altered digital record, from said new material.

The overlay may provide both the teeth and associated tissue (gingiva) structure, thereby providing the two or more replacement teeth. Alternatively, the overlay may afford the mounting of two or more teeth. For example, the overlay may comprise in part the tissue structure, with the replacement teeth mounted thereto.

In an embodiment, the internal cavity of the overlay is a shaped groove or open channel.

In an embodiment, the leading anterior edge has an anterior lean, preferably of up to about 18 degrees.

Advantageously, an inclined anterior leading edge can provide improved engagement between the overlay and the implant frame, as the arrangement provides enhanced resistance to separation between the two parts (the overlay cannot simply lift off the frame). When loading is experienced on the posterior parts of the overlay, the form of the anterior part of the overlay means that it is able to resist resulting forces that would otherwise tend to lift it up and off the implant frame. One of the testing conditions for the dental prosthesis is that such lifting is not experienced at given loads even before application of dental adhesive between the implant frame and the overlay.

Further, such a shaping increases the surface areas available for adhesion between the engaging faces of the implant frame and the overlay.

Such leaning of the anterior edge can be approximately in line with the natural anterior lean of the front teeth, which form part of the overlay. This improves overall fit and load bearing capacity and behaviour.

A further advantage is that the overlay can be of a more homogenous design, providing a more even distribution of material between lingual and labial sides when the overlay is engaged with the implant frame.

The implant frame may be of sufficient length to support replacement of an entire row (upper or lower) of teeth.

In an embodiment, the substantially horizontal portion includes a labial or buccal-side portion and a lingual-side portion comprising the lingual ledge, the lingual-side portion comprising the lingual ledgethe lingual ledge being substantially planar with an occlusal plane along a length of the implant frame. In other words, the occlusal plane and landing ledges on the lingual-side portion of the substantially horizontal portion are parallel. The occlusal plane may be a best-fit plane produced from points corresponding to the tops of the two or more teeth (i.e. in accordance with an occlusal table, as known in the art). Advantageously, compressive (eg. chewing) loads are better distributed in this configuration as the lingual-side portion of the substantially horizontal portion provides a significant platform for withstanding the compressive loads.

In an embodiment, the dental prosthesis further comprises one or more tangential transition surfaces between the substantially horizontal portion and the substantially vertical portion and/or between a lingual face of the vertical portion and a labial or buccal face of the vertical portion. Advantageously, this allows the implant frame to have a relatively smooth profile (in cross-section), beneficial when manufacturing the component. The tangential transition surfaces also reduce stress concentrations in the implant frame that may lead to premature failure when under cyclic or static loading.

In an embodiment, the substantially vertical portion of the implant frame profile is generally of greater length than the substantially horizontal portion and, preferably, of lesser thickness.

In an embodiment, the dental prosthesis further comprises one or more formations to provide or facilitate fixation to a part of a jaw of the patient. For example, the prosthesis may include recesses to allow the device to be mounted to implant screws or pins fixedly attached to the patient's jaw bone.

In an embodiment, the T profile of the implant frame finishes short of the end of the overlay. In other words, the length of the implant frame terminates before the end of the overlay. This ensures that there is no rotational loading that is unsupported, thereby providing an anti-rotation function in the engagement between the overlay and implant frame.

In a further aspect, the present invention provides a method for designing, by use of digital data, a two part dental prosthesis comprising a frame and an overlay, the implant frame to be implanted into a patient's mouth and fixed at multiple implant locations, and the overlay to provide replacement of multiple teeth and associated tissue structure, the method comprising: generating a first digital data file representing a form of the implant frame, defined in part by the positions of prescribed implant locations and in part by a projecting overlay-engaging profile, the implant frame form selected at least in part from one or more stored forms, wherein the implant frame is in the form of an arched bar and has a cross sectional form of an inverted T profile, the inverted T profile having a substantially horizontal portion extending in a transverse direction and a substantially vertical portion extending generally perpendicularly thereto, wherein the substantially horizontal portion comprises a lingual ledge that provides a landing ledge for the overlay when it is fitted on the implant frame, wherein the substantially vertical portion comprises a leading occlusal edge in an anterior part of the implant frame, which supports at least a portion of the overlay, and wherein the leading occlusal edge has an anterior lean with an angle of up to about 30 degrees from the lingual ledge; generating a second digital data file being a tooth digital data file representing a form for the multiple teeth, defined in part by an occlusal table, said occlusal table defining the position of the required teeth; generating a third digital data file being a tissue digital data file representing a form for the associated tissue structure, defined in part by said form for the multiple teeth and in part by a frame-engaging cavity profile of a complementary shaping to said overlay-engaging profile, the tissue structure form selected at least in part from one or more stored forms; modifying said first and/or said third digital data files such that the third digital data file defines a prescribed minimum thickness of material in said associated tissue structure around the entirety of said frame-engaging cavity profile, without substantially affecting said positions of prescribed implant locations; and using the resulting design in fabricating said implant frame and said overlay in accordance with said revised data file or files for introduction and implantation into a patient's mouth, wherein the overlay is fixed to said implant frame by way of inter-engagement of said overlay-engaging profile with said frame-engaging profile, and in use is securely fastened to the implant frame by a dental cement or glue.

Advantageously, having the ability to digitally design both parts of the two-part prosthesis allows for the production of a customised, patient specific, dental prosthesis, which can be reproduced when any damage or changes are required. The method also allows for simultaneous design and optimization of both parts of the two-part prosthesis.

Said modifying may also involve modifying said second digital data file, without substantially affecting the position of said occlusal table.

Said second and third digital data file may be provided in a single, combined data file representing the complete form of said overlay.

In yet a further aspect, the present invention provides a computer-readable medium comprising instructions which, when executed by a computer, cause the computer to carry out the following steps: generate a first digital data file being a digital data file representing the form of an implant frame, the implant frame forming a first part of a two-part dental prosthesis, the frame to be implanted into a patient's mouth, the implant frame defined in part by the positions of prescribed implant locations and in part by a projecting overlay-engaging profile, the implant frame form selected at least in part from one or more stored forms, wherein the implant frame is in the form of an arched bar and has a cross sectional form of an inverted T profile, the inverted T profile having a substantially horizontal portion extending in a transverse direction and a substantially vertical portion extending generally perpendicularly thereto, wherein the substantially horizontal portion comprises a lingual ledge that provides a landing ledge for the overlay when it is fitted on the implant frame, wherein the substantially vertical portion comprises a leading occlusal edge in an anterior part of the implant frame, which supports at least a portion of the overlay, and wherein the leading occlusal edge has an anterior lean with an angle of up to about 30 degrees from the lingual ledge; generate a second digital data file being a tooth digital data file representing a form for multiple teeth, the multiple teeth provided as part of an overlay, the overlay comprised in a second part of said two-part dental prosthesis, the multiple teeth defined in part by an occlusal table, the occlusal table defining the position of the required teeth, and in use the overlay is securely fastened to the implant frame by a dental cement or glue; generate a third digital data file being a tissue digital data file representing a form for a tissue structure associated with said multiple teeth, said tissue structure provided as part of said overlay and defined in part by said form for the multiple teeth and in part by a frame-engaging cavity profile of a complementary shaping to said overlay-engaging profile, the tissue structure form selected at least in part from one or more stored forms; and modify said first and/or said third digital data files such that the third digital data file defines a prescribed minimum thickness of material in said associated tissue structure around the entirety of said frame-engaging cavity profile, without substantially affecting said positions of prescribed implant locations, thereby to produce a final set of digital data defining the two-part dental prosthesis.

Said modifying step may also involve modifying said second digital data file, without substantially affecting the position of said occlusal table.

Said step of generating the second and third digital data files may be combined into generating a single combined data file representing the complete form of the overlay.

As used herein, except where the context requires otherwise, the term "comprise" and variations of the term, such as "comprising", "comprises" and "comprised", are not intended to exclude further additives, components, integers or steps.

Further aspects of the present invention and further embodiments of the aspects described in the preceding paragraphs will become apparent from the following description, given by way of example and with reference to the accompanying drawings.

### Brief description of the drawings

Figure 1 illustrates a rear perspective view of a dental prosthesis in accordance with an embodiment of the invention;
Figure 2 illustrates a cross-sectional view of a posterior segment of an implant frame in accordance with an embodiment of the invention;
Figure 3 illustrates a cross-sectional view of an anterior segment of the implant frame in accordance with an embodiment of the invention;
Figure 4 illustrates the cross-sectional view of Figure 2 with an overlay in accordance with an embodiment of the invention, before fitment of the overlay with the implant frame;
Figure 5 illustrates the cross-sectional view of Figure 4, with the overlay fitted with the implant frame;
Figure 6 illustrates a method of producing an implant frame in accordance with an embodiment of the invention; and
Figure 7 illustrates a method of producing an overlay in accordance with an embodiment of the invention.

### Detailed description of the embodiments

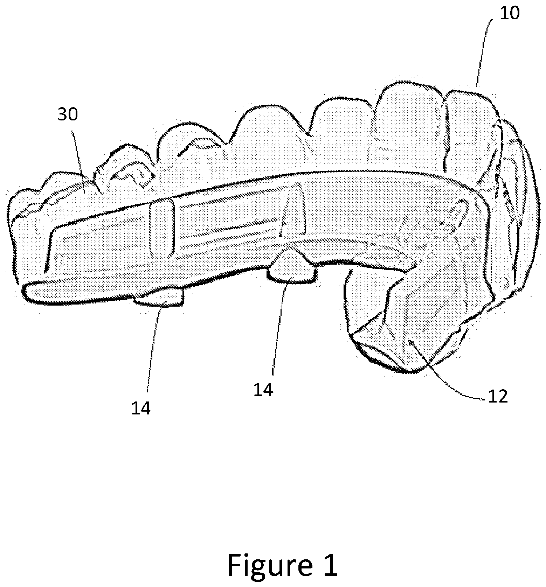

Figure 1 illustrates a two-part dental prosthesis 10, having an implant frame 12 configured to be mounted in the mouth of patient, and an overlay 30 secured to the implant frame 12. References to a transverse direction are to be taken as references to a direction parallel to a transverse plane as generally understood in the anatomical position (ie. patient upright). References to a vertical direction refer to the vertical direction as generally understood in the anatomical position. For ease of understanding, dental prosthesis 10 is intended to replace a bottom row of teeth in a patient's mouth, however it is to be understood that the invention can be equally applied to restoration of a patient's upper jaw and teeth.

Implant frame 12 extends in the generally transverse direction, and is in the form of an arched bar, having the general form of an inverted T shape when viewed in cross-section (when in the installed position to the lower arch of a patient's mouth). The implant frame 12 is mounted into the mouth of a patient through a number of implant lugs or other suitable formations 14, which engage implants (not shown) which extend downwardly in a generally vertical direction and are fastened into the patient's lower jaw bone. Screws can be used to assist the engagement between the implant and the implant formation 14. However, in some embodiments the implant formations 14 take the form of pins, allowing the implant frame 12 to be directly fixedly mounted into the patient's jaw. Numerous factors may influence the number, shaping, dimensions, position and orientation of the implant formations 14 provided on the implant frame 12 to ensure a secure mounting within the patient's mouth. This may include inter alia the positioning of the implant frame, physical attributes of the patient, the material in which the implant frame is produced, and the expected loading on the implant frame.

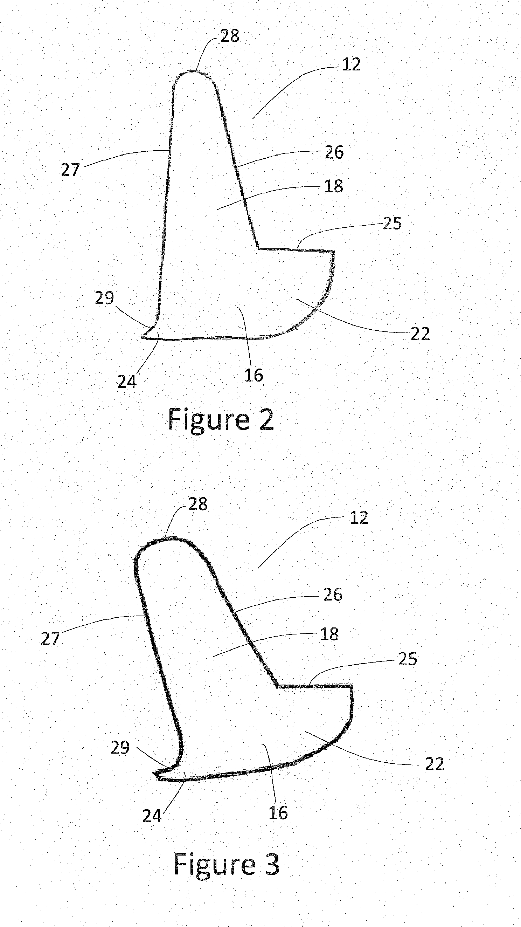

Reference is now made to Figure 2, showing a cross-sectional view of a posterior part of implant frame 12. The inverted T-shaped cross-section includes a horizontal portion 16 and a vertical portion 18. As will be understood, the terms 'horizontal' and 'vertical' are used as approximations only, i.e., to refer to orientations in those general directions. As will be understood, the horizontal direction in this context is synonymous with a direction in the transverse plane. The vertical portion 18 extends from the horizontal portion 16 in the vertical direction. As can be seen from Figure 1, the T profile of the implant frame finishes short of the end of the overlay 30. This means that there is no rotational loading between the implant frame 12 and the overlay 30 that is unsupported, which provides an anti-rotation function.

The horizontal portion 16 includes a lingual-side portion 22 and a buccal-side portion 24. As seen in Figure 2, the lingual-side portion 22 is a larger part of horizontal portion 16 than buccal-side portion 24. The lingual-side portion 22 includes a lingual ledge 25 that lies generally in the transverse plane along the full length of the implant frame 12. As discussed below, the lingual ledge 25 provides a landing ledge for the overlay 30 when it is fitted on the implant frame 12, with the lingual ledge 25 configured to bear the major loads from the overlay 30 after fitment. The buccal-side portion 24 includes a buccal ledge 29, which provides a further landing ledge for the overlay 30 when it is fitted on the implant frame 12. The vertical portion 18 includes a lingual face 26, a buccal face 27 and a top face 28. The lingual ledge 25, lingual face 26, top face 28, buccal face 27 and buccal ledge 29 include tangential transition surfaces that provide the implant frame 12 with a shape convenient for manufacturing. For example, when machining (eg. Milling) the implant frame 12, the tangential surfaces can allow for the use of less complex tools and a smaller number of tool passes. This form of manufacturing is not common in dental hybrid designs such as described here. Further, the tangential surfaces reduce stress concentrations in the implant frame 12 that may lead to premature failure when under cyclic or static loading. In trials, tangential surfaces of around 4mm radius were found to be particularly beneficial.

The lingual ledge 25, lingual face 26, top face 28, buccal face 27 and buccal ledge 29 together form an upper exterior surface of implant frame 12 defining a first engagement profile for the dental prosthesis 10. However, a person skilled in the art will appreciate that in alternative forms of the invention, some of these parts may not be comprised in the upper exterior surface of implant frame 12. For example, the buccal ledge 29 does not necessarily need to form part of the first engagement profile defined by the upper exterior surface.

Reference is now made to Figure 3, where a cross-sectional view of an anterior segment of implant frame 12 is provided. As evident from a comparison with Figure 2, the anterior segment of implant frame 12 provides a leading occlusal edge in an anterior region of the implant frame 12. As will be understood, implant frame 12 has a progressively increasing anterior leaning vertical portion 18 moving from the lateral (posterior) to the medial (anterior) positions. This anterior leaning of the vertical portion 18 provides support for the seating of the overlay 30. The extent of the anterior lean can be selected depending on patient specific or manufacturing related factors. The inventors have found that an optimal anterior lean can range up to about 30°, preferably up to around 18°. The implant frame 12 and overlay 30 can be brought together by sliding the overlay 30 obliquely over the implant frame 12, the precise shaping selected to allow for the sliding engagement, as discussed further below.

It will also be appreciated from Figure 3 that despite the anterior leaning of the implant frame 12, the lingual ledge 25 remains generally planar in the transverse plane in both the anterior and posterior segments. Specifically, the lingual ledge 25 is substantially planar in an occlusal plane along the length of the implant frame. In other words, the lingual ledge 25 is parallel with the occlusal plane (the occlusal plane being a best-fit plane produced from points corresponding to the tops of the teeth). This provides a uniform landing area along the entire length of the implant frame 12, and ensures that compressive (eg. Chewing) loads are well distributed as the lingual-ledge 25 provides a substantial platform for withstanding such loads, in a plane normal to the direction of load. It is noted that in Figure 3, in reference to an anterior part of the mouth, reference 27 refers to a labial face and reference 29 to a labial ledge.

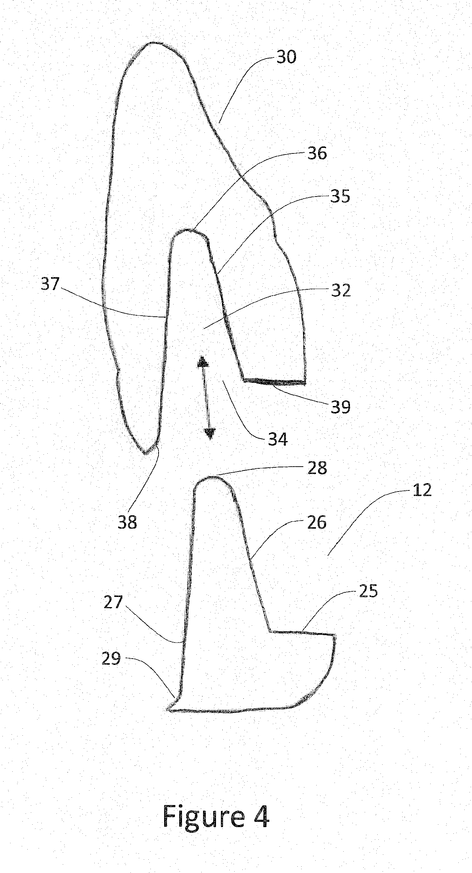

Figure 4 illustrates the posterior segment of implant frame 12 and overlay 30 ready for fitting to one another. Overlay 30 includes an internal cavity 32 in the form of a relatively deep groove or channel. The internal cavity 32 is defined by an opening 34 in a lower section of overlay 30 between a buccal-side abutment lip 38 and a lingual-side abutment face 39. An interior surface of the cavity 32 is defined by a lingual-side mating face 35, a top mating face 36 and a buccal-side mating face 37. The interior surface together with the buccal-side abutment lip 38 and the lingual-side abutment face 39 thereby define a second engagement profile configured to engage the first engagement profile when the overlay 30 is fitted to the implant frame 12. The second engagement profile is shaped substantially as an inversion of the first engagement profile of the implant frame 12. Thus, when the overlay 30 is fitted to the implant frame 12, lingual-side abutment face 39, lingual-side mating face 35, top mating face 36, buccal-side mating face 37, and buccal-side abutment lip 38 complementarily abut lingual ledge 25, lingual face 26, top face 28, buccal face 27 and buccal ledge 29 respectively.

The overlay 30 is adapted to provide two or more teeth, or afford mounting thereof. That is, the overlay 30 may be in the form of a superstructure providing the replacement teeth of a patient (as well as associated gingiva), or alternatively may provide a suitable structure for mounting of multiple teeth thereto. The depicted embodiment is of the former embodiment, whereby the overlay provides the replacement teeth as well as the soft tissue (gingival) prosthetic part.

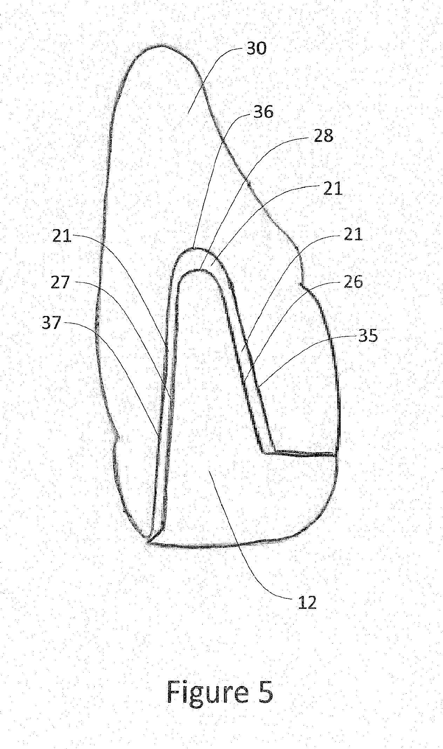

Reference is now made to Figure 5, which shows the overlay 30 brought into engagement with implant frame 12. This is brought about by mounting the overlay 30 over vertical portion 18 of the implant frame 12 so that vertical portion 18 passes through opening 34 and into cavity 32 of the overlay 30. The overlay 30 is securely fastened to the implant frame 12 by suitable dental cement or glue. The cement or glue can be stronger than that used with conventional dental prostheses that use a weaker wax to hold a tooth to an implanted bar. To accommodate the dental cement between the implant frame 12 and overlay 30, cement spacing, i.e., small cement offsets 21 are provided. As shown in the depicted embodiment, the cement offsets are provided between the top face 28 and top mating face 36, between lingual face 26 and lingual-side mating face 35, and between buccal face 27 and buccal-side mating face 37. As can be seen in Figure 5, no cement spacing is provided between the lingual ledge 25 and lingual-side abutment face 39, and between buccal ledge 29 and buccal-side abutment lip 38, because of the direct load bearing required between these surfaces. Cement can be applied in these areas but the lack of cement spacing required at these landing planes means the cement is predominantly ejected.

As can be seen in Figure 5, the second engagement profile is shaped substantially as an inversion of the first engagement profile. This has numerous benefits, particularly in the manufacturing of the dental prosthesis described herein. As noted above, one of the advantages provided by the present invention is the use of inverted or complementary engagement profiles that allow for the manufacture of the implant frame 12 and the overlay 30 at the same time.

As discussed further below, the invention involves use of a customised implant frame 12 and overlay 30, both purpose-produced as part of the design and fabrication of the dental prosthesis 10. This also allows for simpler reproduction of a damaged one of the components of the dental prosthesis 10. Unlike conventional methods, the components of the dental prosthesis 10 are digitally recorded, i.e maintained or stored in one or more files, and provides an accurate representation of the dental prosthesis 10. The files are preferably CAD files, such as stl format. As will be appreciated by a person skilled in the art, the cement spacing can be specified when designing the engagement profiles of the implant frame 12 and the overlay 30. This provides a user an array of varying cement thickness spacing throughout the design. For example, the amount of cement spacing provided can be varied along the length of the dental prosthesis 10. Ideally, the cement spacing provided ensures that the smallest possible seam of cement, between the implant frame 12 and overlay 30, when exposed to the tissue surfaces.

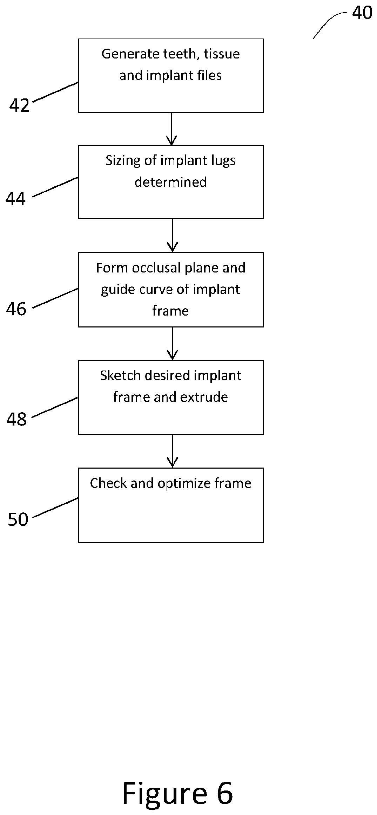

Figure 6 sets out one embodiment of a method 40 of producing the implant frame 12. Steps of the method are largely iterative in order to optimise the design in view of various design constraints, some of which are patient-specific constraints, and others being constraints relating to the components of the dental prosthesis. It will understood that while the steps below for producing the implant frame and the overlay are explained separately, the method of producing both components can be a process undertaken simultaneously, with modification steps between the production of the implant frame and the production of the overlay occurring before arriving at the final form of the dental prosthesis. The checking and optimisation steps can be done in conjunction with designing both components of the two-part dental prosthesis. The methods described below can be stored on a computer-readable medium comprising instructions which, when executed by a computer, cause the computer to carry out the method.

At step 42, the digital files of the intended teeth and tissue structures are suitably generated, and a file containing an implant frame 12 is also generated. The digital file of the implant frame may be a generic implant frame file selected from one or more stored implant frame files, and is defined in part by prescribed implant locations. In relation to the digital file containing the tissue structure, this may be acquired by scanning an implant impression received from a patient, scanning an implant model that has been received, or through directly scanning inside the patient's mouth. The data provided by the scan includes information pertaining to the location and/or orientation of earlier inserted implants in the patient's mouth, the implants being configured to engage with the subsequently designed implant frame through corresponding implant formations.

The implant frame 12 defines a projecting overlay-engaging profile. The teeth digital file represents form for the multiple replacement teeth, and is defined in part by an occlusal table, which defines the positions of the required teeth. It will be appreciated that modifications of this file are possible, but should not substantially affect the position of the occlusal table. The tissue digital file in this embodiment is selected from one or more stored tissue structures, and represents a form of the tissue structure that accompanies the teeth. The tissue digital file is defined in part by the form of the multiple teeth and in part by a frame-engaging cavity profile, which is of a complementary shaping to the overlay-engaging profile. The tissue and teeth digital files may be a combined file representing a complete form of the overlay 30.

At step 44, sizing of the implant formations 14 is undertaken for placement within the teeth and tissue structures. The implant formations are designed to mount to implants inserted in the patient's mouth and fixed to the jaw bone, eg. by surgical screws.

At step 46, an occlusal plane is formed from the occlusal table by plotting points on the topmost edges of the teeth and creating a best fit plane. On this plane, a set of points are plotted representing the teeth with one set of points at an anterior region of the tissue structure and a set of points on either side of the anterior region. A guide curve is thus produced, which approximates an arc that goes through the middle of each tooth on the occlusal table.

At step 48, the remaining geometrical aspects of the implant frame are digitally rendered and an extruded implant frame is produced.

At step 50, the implant frame is checked and optimised. This ensures that there are no defects in the design, such as the bar extending beyond the confines of the teeth, the implant formations being placed outside the confines of the implant bar, and so forth. Once the checking and optimisation is complete, a digital record of the implant frame 12 is now complete.

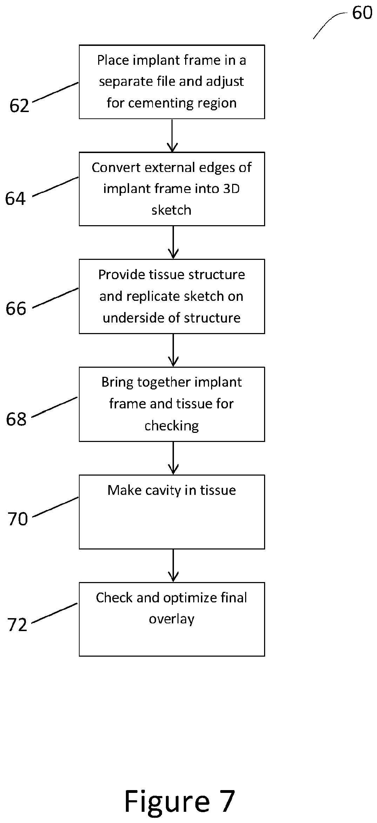

Figure 7 sets out one embodiment of a method 60 for producing the overlay 30. At step 62, the implant frame 12 is placed into a separate digital file and an offset surface is placed over the vertical portion 18 of the implant frame to denote the cementing region.

At step 64, a 3D sketch of the external edges of the implant frame 12 is created, thereby defining an overlay-engaging profile.

At step 66, the digital file containing the tissue structure is provided and points are selected on the underside of the tissue structure to replicate the external edges. This allows for the forming of a frame-engaging cavity profile of a complementary shaping to the overlay-engaging profile on the implant frame 12.

At step 68, the tissue structure and implant frame 12 are brought together and checked for fitting purposes.

At step 70, the frame-engaging cavity is formed in the tissue structure and it is determined whether a prescribed minimum thickness of material in the tissue structure around the entirety of the frame-engaging cavity profile is provided, without substantially affecting the positions of the implant formation 14 locations.

At step 72, the tissue structure is checked and optimised as required. Once the checking and optimisation is complete, a digital record of the overlay 30 is now complete.

Having a digital record of both the implant frame 12 and the overlay 30 allows the manufacture of these two components of the dental prosthesis 10 to be produced at the same time. In the event that one of the components is damaged (often the overlay 30), the component can be simply reproduced from its respective digital record. As will be appreciated by a person skilled in the art, either component can easily be upgraded. For example, a given implant frame 12 may be left in the mouth of the patient, with an overlay 30 made of a more durable material provided for the patient.

With a suitable digital record of the implant frame 12 and overlay 30 produced, the CAM software can be used to program the operations for machining the components of the dental prosthesis. Suitable means for manufacturing the dental prosthesis 10 include CNC machining (e.g. a 5 axis machine), subtractive milling methods, additive laser sintering, and laser melting methods. Suitable materials used to manufacture the implant frame 12 and overlay 30 can include titanium, zirconia, cobalt chromium, peek, PMMA (Acrylic), acetyl based plastic, nanoceramics, fiberglass, and suitable composite materials.

It will be understood that the invention disclosed and defined in this specification extends to all alternative combinations of two or more of the individual features mentioned or evident from the text or drawings. All of these different combinations constitute various alternative aspects of the invention.

## Claims

1. A dental prosthesis (10), comprising:
an implant frame (12) configured to be fixed into the mouth of a patient to support replacement of two or more teeth of the patient, the implant frame having an exterior surface defining a first engagement profile; and
an overlay (30) adapted to be secured to the implant frame (12) and to provide mounting of the two or more teeth, the overlay (30) having an internal cavity (32) that extends along a substantial length of the overlay (30), wherein the internal cavity defines a second engagement profile,
wherein the second engagement profile is complementary to the first engagement profile, thereby allowing fitment of a substantial portion of the exterior surface of the implant frame (12) within the internal cavity (32),
wherein the implant frame (12) is in the form of an archedbar and has a cross-sectional form of an inverted T profile, the inverted T profile having a substantially horizontal portion (16) extending in a transverse direction and a substantially vertical portion (18) extending generally perpendicularly thereto,
wherein the substantially horizontal portion (16) comprises a lingual ledge (25) that provides a landing ledge for the overlay (30) when it is fitted on the implant frame (12),
wherein the substantially vertical portion (18) comprises a leading occlusal edge in an anterior part of the implant frame, which supports at least a portion of the overlay (30), and wherein the leading occlusal edge has an anterior lean with an angle of up to about 30 degrees from the lingual ledge (25), and
wherein the overlay (30) is securely fastened to the implant frame (12) by a dental cement or glue.

2. The dental prosthesis (10) of claim 1, wherein said internal cavity of the overlay (30) is a shaped groove or open channel.

3. The dental prosthesis (10) of claim 1, wherein the anterior lean has an angle of up to about 18 degrees.

4. The dental prosthesis (10) of any one of the preceding claims, wherein the T profile of the implant frame (12) finishes short of the end of the overlay (30).

5. The dental prosthesis (10) of claim 4, wherein the substantially horizontal portion (16) includes a lingual-side portion (22) comprising the lingual ledge (25) and a buccal or labial-side portion (24), the lingual ledge (25) being substantially planar with an occlusal plane along a length of the implant frame (12).

6. The dental prosthesis (10) of claim 5, further comprising one or more tangential transition surfaces between the substantially horizontal portion (16) and the substantially vertical portion and/or between a lingual-face of the vertical portion and a buccal or labial-face of the vertical portion.

7. The dental prosthesis (10) of any one of the preceding claims, further comprising one or more formations (14) to provide or facilitate fixation to a part of the jaw of the patient.

8. A method for designing, by use of digital data, a two part dental prosthesis comprising an implant frame (12) and an overlay (30), the implant frame (12) to be implanted into a patient's mouth and fixed at multiple implant locations, and the overlay (30) to provide replacement of multiple teeth and associated tissue structure, the method comprising:
generating a first digital data file representing a form of the implant frame (12), defined in part by the positions of prescribed implant locations and in part by a projecting overlay-engaging profile, the implant frame (12) form selected at least in part from one or more stored forms, wherein the implant frame (12) is in the form of an arched bar and has a cross sectional form of an inverted T profile, the inverted T profile having a substantially horizontal portion (16) extending in a transverse direction and a substantially vertical portion (18) extending generally perpendicularly thereto, wherein the substantially horizontal portion (16) comprises a lingual ledge (25) that provides a landing ledge for the overlay (30) when it is fitted on the implant frame (12), wherein the substantially vertical portion (18) comprises a leading occlusal edge in an anterior part of the implant frame, which supports at least a portion of the overlay (30), and wherein the leading occlusal edge has an anterior lean with an angle of up to about 30 degrees from the lingual ledge (25);
generating a second digital data file being a tooth digital data file representing a form for the multiple teeth, defined in part by an occlusal table, said occlusal table defining the position of the required teeth;
generating a third digital data file being a tissue digital data file representing a form for the associated tissue structure, defined in part by said form for the multiple teeth and in part by a frame-engaging cavity profile of a complementary shaping to said overlay-engaging profile, the tissue structure form selected at least in part from one or more stored forms;
modifying said first and/or said third digital data files such that the third digital data file defines a prescribed minimum thickness of material in said associated tissue structure around the entirety of said frame-engaging cavity profile, without substantially affecting said positions of prescribed implant locations; and
using the resulting design in fabricating said implant frame (12) and said overlay (30) in accordance with said revised data file or files for introduction and implantation into a patient's mouth, wherein the overlay (30) is fixed to said implant frame (12) by way of inter-engagement of said overlay-engaging profile with said frame-engaging profile, and in use is securely fastened to the implant frame (12) by a dental cement or glue.

9. The method of claim 8, wherein said modifying also involves modifying said second digital data file, without substantially affecting the position of said occlusal table.

10. The method of claim 8 and claim 9, wherein said second and third digital data files are provided in a single, combined data file representing the complete form of said overlay (30).

11. A computer-readable medium comprising instructions which, when executed by a computer, cause the computer to carry out the following steps:
generate a first digital data file representing the form of an implant frame (12), the implant frame (12) forming a first part of a two-part dental prosthesis, the frame to be implanted into a patient's mouth, the implant frame defined in part by the positions of prescribed implant locations and in part by a projecting overlay-engaging profile, the implant frame (12) form selected at least in part from one or more stored forms, wherein the implant frame (12) is in the form of an arch shaped bar and has a cross sectional form of an inverted T profile, the inverted T profile having a substantially horizontal portion (16) extending in a transverse direction and a substantially vertical portion (18) extending generally perpendicularly thereto, wherein the substantially horizontal portion (16) comprises a lingual ledge (25) that provides a landing ledge for the overlay (30) when it is fitted on the implant frame (12), wherein the substantially vertical portion (18) comprises a leading occlusal edge in an anterior part of the implant frame, which supports at least a portion of the overlay (30), and wherein the leading occlusal edge has an anterior lean with an angle of up to about 30 degrees from the lingual ledge (25);
generate a second digital data file being a tooth digital data file representing a form for multiple teeth, the multiple teeth provided as part of an overlay (30), the overlay (30) comprised in a second part of said two-part dental prosthesis, the multiple teeth defined in part by an occlusal table, the occlusal table defining the position of the required teeth, and in use the overlay (30) is securely fastened to the implant frame (12) by a dental cement or glue;
generate a third digital data file being a tissue digital data file representing a form for a tissue structure associated with said multiple teeth, said tissue structure provided as part of said overlay (30) and defined in part by said form for the multiple teeth and in part by a frame-engaging cavity profile of a complementary shaping to said overlay-engaging profile, the tissue structure form selected at least in part from one or more stored forms; and
modify said first and/or said third digital data files such that the third digital data file defines a prescribed minimum thickness of material in said associated tissue structure around the entirety of said frame-engaging cavity profile, without substantially affecting said positions of prescribed implant locations, thereby to produce a final set of digital data defining the two-part dental prosthesis.

12. The computer-readable medium of claim 11, wherein said modifying step also involves modifying said second digital data file, without substantially affecting the position of said occlusal table.

13. The computer-readable medium of claim 11 or claim 12, wherein said step of generating the second and third digital data files is combined into generating a single combined data file representing the complete form of the overlay (30).

## Patentansprüche

1. Zahnprothese (10), die Folgendes umfasst:
einen Implantatrahmen (12), der ausgelegt ist, im Mund eines Patienten befestigt zu sein, um einen Ersatz für zwei oder mehr Zähne des Patienten zu tragen, wobei der Implantatrahmen eine Außenfläche aufweist, die ein erstes Eingriffprofil definiert; und
ein Overlay (30), das ausgelegt ist, sicher am Implantatrahmen (12) befestigt zu sein und das Anbringen der zwei oder mehr Zähne bereitzustellen, wobei das Overlay (30) einen inneren Hohlraum (32) aufweist, der sich entlang einer wesentlichen Länge des Overlays (30) erstreckt, wobei der innere Hohlraum ein zweites Eingriffprofil definiert,
wobei das zweite Eingriffprofil zum ersten Eingriffprofil komplementär ist, wodurch die Passung eines wesentlichen Abschnitts der Außenfläche des Implantatrahmens (12) im inneren Hohlraum (32) ermöglicht wird,
wobei der Implantatrahmen (12) in der Form eines gebogenen Stabs vorliegt und eine Querschnittsform eines umgekehrten T-Profils aufweist, wobei das umgekehrte T-Profil einen im Wesentlichen horizontalen Abschnitt (16), der sich in einer transversalen Richtung erstreckt, und einen im Wesentlichen vertikalen Abschnitt (18), der sich im Allgemeinen senkrecht dazu erstreckt, aufweist,
wobei der im Wesentlichen horizontale Abschnitt (16) eine Zungenleiste (25) umfasst, die eine Aufnahmeleiste für das Overlay (30) bereitstellt, wenn es auf dem Implantatrahmen (12) eingepasst ist,
wobei der im Wesentlichen vertikale Abschnitt (18) eine vordere Aufbisskante in einem anterioren Abschnitt des Implantatrahmens umfasst, die zumindest einen Abschnitt des Overlays (30) trägt, und wobei die vordere Aufbisskante eine anteriore Neigung mit einem Winkel von bis zu etwa 30 Grad von der Zungenleiste (25) aufweist, und
wobei das Overlay (30) durch einen Zahnzement oder Zahnklebstoff sicher am Implantatrahmen (12) befestigt ist.

2. Zahnprothese (10) nach Anspruch 1, wobei der innere Hohlraum des Overlays (30) eine ausgeformte Rille oder ein offener Kanal ist.

3. Zahnprothese (10) nach Anspruch 1, wobei die anteriore Neigung einen Winkel von bis zu etwa 18 Grad aufweist.

4. Zahnprothese (10) nach einem der vorhergehenden Ansprüche, wobei das T-Profil des Implantatrahmens (12) kurz vor dem Ende des Overlays (30) endet.

5. Zahnprothese (10) nach Anspruch 4, wobei der im Wesentlichen horizontale Abschnitt (16) einen zungenseitigen Abschnitt (22), der die Zungenleiste (25) umfasst, und einen wangenseitigen oder lippenseitigen Abschnitt (24) enthält, wobei die Zungenleiste (25) im Wesentlichen zu einer Bissebene entlang einer Länge des Implantatrahmens (12) planar ist.

6. Zahnprothese (10) nach Anspruch 5, die ferner eine oder mehrere Tangentialübergangsflächen zwischen dem im Wesentlichen horizontalen Abschnitt (16) und dem im Wesentlichen vertikalen Abschnitt und/oder zwischen einer Zungenfläche des vertikalen Abschnitts und einer Wangen- oder Lippenfläche des vertikalen Abschnitts umfasst.

7. Zahnprothese (10) nach einem der vorhergehenden Ansprüche, die ferner eine oder mehrere Strukturen (14), um eine Befestigung an einem Abschnitt des Kiefers des Patienten bereitzustellen oder zu erleichtern, umfasst.

8. Verfahren zum Entwerfen einer zweiteiligen Zahnprothese, die einen Implantatrahmen (12) und ein Overlay (30) umfasst, unter Verwendung digitaler Daten, wobei der Implantatrahmen (12) in den Mund eines Patienten implantiert und an mehreren Implantatorten befestigt werden soll und das Overlay (30) einen Ersatz für mehrere Zähne und zugeordnete Gewebestruktur bereitstellen soll, wobei das Verfahren Folgendes umfasst:
Erzeugen einer ersten digitalen Datendatei, die eine Form des Implantatrahmens (12) darstellt, die teilweise durch die Positionen verordneter Implantatorte und teilweise durch ein Projektions-Overlay-Eingriffprofil definiert ist, wobei die Form des Implantatrahmens (12) zumindest teilweise aus einer oder mehreren gespeicherten Formen ausgewählt wird, wobei der Implantatrahmen (12) in der Form eines gebogenen Stabs vorliegt und eine Querschnittsform eines umgekehrten T-Profils aufweist, wobei das umgekehrte T-Profil einen im Wesentlichen horizontalen Abschnitt (16), der sich in einer transversalen Richtung erstreckt, und einen im Wesentlichen vertikalen Abschnitt (18), der sich im Allgemeinen senkrecht dazu erstreckt, aufweist, wobei der im Wesentlichen horizontale Abschnitt (16) eine Zungenleiste (25) umfasst, die eine Aufnahmeleiste für das Overlay (30) bereitstellt, wenn es auf dem Implantatrahmen (12) eingepasst ist, wobei der im Wesentlichen vertikale Abschnitt (18) eine vordere Aufbisskante in einem anterioren Abschnitt des Implantatrahmens umfasst, die zumindest einen Abschnitt des Overlays (30) trägt, und wobei die vordere Aufbisskante eine anteriore Neigung mit einem Winkel von bis zu etwa 30 Grad von der Zungenleiste (25) aufweist;
Erzeugen einer zweiten digitalen Datendatei, die eine digitale Zahndatendatei ist, die eine Form der mehreren Zähne darstellt, die teilweise durch eine Aufbisstabelle definiert ist, wobei die Aufbisstabelle die Position der erforderlichen Zähne definiert;
Erzeugen einer dritten digitalen Datendatei, die eine digitale Gewebedatendatei ist, die eine Form für die zugeordnete Gewebestruktur darstellt, die teilweise durch die Form für die mehreren Zähne und teilweise durch ein Rahmeneingriffs-Hohlraumprofil mit einer zu dem Overlay-Eingriffprofil komplementären Formgebung definiert ist, wobei die Form der Gewebestruktur zumindest teilweise aus einer oder mehreren gespeicherten Formen ausgewählt wird;
Verändern der ersten und/oder der dritten digitalen Datendateien, derart, dass die dritte digitale Datendatei eine verordnete minimale Materialdicke in der zugeordneten Gewebestruktur um das gesamte Rahmeneingriffs-Hohlraumprofil definiert, ohne die Positionen der verordneten Implantatorte wesentlich zu beeinflussen; und
Verwenden des resultierenden Entwurfs beim Herstellen des Implantatrahmens (12) und des Overlays (30) in Übereinstimmung mit der überarbeiteten Datendatei oder den überarbeiteten Datendateien zum Einsetzen und zur Implantation in den Mund eines Patienten, wobei das Overlay (30) mittels gegenseitigen Eingriffs des Overlay-Eingriffprofils mit dem Rahmeneingriffsprofil am Implantatrahmen (12) befestigt wird und im Gebrauch durch einen Zahnzement oder Zahnklebstoff sicher am Implantatrahmen (12) befestigt ist.

9. Verfahren nach Anspruch 8, wobei das Verändern außerdem das Verändern der zweiten digitalen Datendatei, ohne die Position der Aufbisstabelle wesentlich zu beeinflussen, enthält.

10. Verfahren nach Anspruch 8 und Anspruch 9, wobei die zweite und die dritte digitale Datendatei in einer einzigen kombinierten Datendatei bereitgestellt werden, die die vollständige Form des Overlays (30) darstellt.

11. Computerlesbares Medium, das Anweisungen umfasst, die dann, wenn sie durch einen Computer ausgeführt werden, bewirken, dass der Computer die folgenden Schritte ausführt:
Erzeugen einer ersten digitalen Datendatei, die die Form eines Implantatrahmens (12) darstellt, wobei der Implantatrahmen (12) eine erste Komponente einer zweiteiligen Zahnprothese bildet, wobei der Rahmen in den Mund eines Patienten implantiert werden soll, wobei der Implantatrahmen teilweise durch die Positionen verordneter Implantatorte und teilweise durch ein Projektions-Overlay-Eingriffprofil definiert ist, wobei die Form des Implantatrahmens (12) zumindest teilweise aus einer oder mehreren gespeicherten Formen ausgewählt wird, wobei der Implantatrahmen (12) in der Form eines bogenförmigen Stabs vorliegt und eine Querschnittsform eines umgekehrten T-Profils aufweist, wobei das umgekehrte T-Profil einen im Wesentlichen horizontalen Abschnitt (16), der sich in einer transversalen Richtung erstreckt, und einen im Wesentlichen vertikalen Abschnitt (18), der sich im Allgemeinen senkrecht dazu erstreckt, aufweist, wobei der im Wesentlichen horizontale Abschnitt (16) eine Zungenleiste (25) umfasst, die eine Aufnahmeleiste für das Overlay (30) bereitstellt, wenn es auf dem Implantatrahmen (12) eingepasst ist, wobei der im Wesentlichen vertikale Abschnitt (18) eine vordere Aufbisskante in einem anterioren Abschnitt des Implantatrahmens umfasst, die zumindest einen Abschnitt des Overlays (30) trägt, und wobei die vordere Aufbisskante eine anteriore Neigung mit einem Winkel von bis zu etwa 30 Grad von der Zungenleiste (25) aufweist;
Erzeugen einer zweiten digitalen Datendatei, die eine digitale Zahndatendatei ist, die eine Form für mehrere Zähne darstellt, wobei die mehreren Zähne als Teil eines Overlays (30) bereitgestellt werden, wobei das Overlay (30) in einer zweiten Komponente der zweiteiligen Zahnprothese umfasst ist, wobei die mehreren Zähne teilweise durch eine Aufbisstabelle definiert werden, wobei die Aufbisstabelle die Position der erforderlichen Zähne definiert und das Overlay (30) im Gebrauch durch einen Zahnzement oder Zahnklebstoff sicher am Implantatrahmen (12) befestigt ist;
Erzeugen einer dritten digitalen Datendatei, die eine digitale Gewebedatendatei ist, die eine Form für eine Gewebestruktur, die den mehreren Zähnen zugeordnet ist, darstellt, wobei die Gewebestruktur als Teil des Overlays (30) bereitgestellt wird und teilweise durch die Form für die mehreren Zähne und teilweise durch ein Rahmeneingriffs-Hohlraumprofil mit einer zu dem Overlay-Eingriffprofil komplementären Formgebung definiert ist, wobei die Form der Gewebestruktur zumindest teilweise aus einer oder mehreren gespeicherten Formen ausgewählt wird; Verändern der ersten und/oder der dritten digitalen Datendateien, derart, dass die dritte digitale Datendatei eine verordnete minimale Materialdicke in der zugeordneten Gewebestruktur um das gesamte Rahmeneingriffs-Hohlraumprofil definiert, ohne die Positionen der verordneten Implantatorte wesentlich zu beeinflussen, um dadurch einen endgültigen Satz digitaler Daten zu erzeugen, der die zweiteilige Zahnprothese definiert.

12. Computerlesbares Medium nach Anspruch 11, wobei der Veränderungsschritt außerdem das Verändern der zweiten digitalen Datendatei, ohne die Position der Aufbisstabelle wesentlich zu beeinflussen, enthält.

13. Computerlesbares Medium nach Anspruch 11 oder Anspruch 12, wobei der Schritt des Erzeugens der zweiten und der dritten digitalen Datendatei in das Erzeugen einer einzigen kombinierten Datendatei, die die vollständige Form des Overlays (30) darstellt, kombiniert wird.

## Revendications

1. Prothèse dentaire (10), comprenant :
une armature d'implant (12) configurée pour être fixée dans la bouche d'un patient pour permettre le remplacement d'au moins deux dents du patient, l'armature d'implant étant pourvue d'une surface extérieure définissant un premier profil d'emboîtement ; et
un overlay (30) adapté à être assujetti à l'armature d'implant (12) et à permettre le montage des au moins deux dents, l'overlay (30) étant pourvu d'une cavité interne (32) qui s'étend sur une longueur importante de l'overlay (30), la cavité interne définissant un deuxième profil d'emboîtement,
le deuxième profil d'emboîtement étant complémentaire du premier profil d'emboîtement, de manière à permettre l'ajustement d'une partie importante de la surface extérieure de l'armature d'implant (12) à l'intérieur de la cavité interne (32),
l'armature d'implant (12) prenant la forme d'une barre arquée et prenant, en coupe transversale, la forme d'un profil en T inversé, le profil en T inversé étant pourvu d'une partie sensiblement horizontale (16) s'étendant dans une direction transversale et d'une partie sensiblement verticale (18) s'étendant généralement perpendiculairement à celle-ci,
la partie sensiblement horizontale (16) comprenant un rebord lingual (25) qui fournit un rebord de réception pour l'overlay (30) lorsque celui-ci est ajusté sur l'armature d'implant (12),
la partie sensiblement verticale (18) comprenant un bord occlusal avant dans une partie antérieure de l'armature d'implant, qui supporte au moins une partie de l'overlay (30), et le bord occlusal avant étant pourvu d'une inclinaison antérieure formant un angle pouvant atteindre environ 30 degrés avec le rebord lingual (25), et
l'overlay (30) étant solidarisé à l'armature d'implant (12) par un ciment dentaire ou une colle dentaire.

2. Prothèse dentaire (10) selon la revendication 1, ladite cavité interne de l'overlay (30) consistant en une rainure profilée ou un canal ouvert.

3. Prothèse dentaire (10) selon la revendication 1, l'inclinaison antérieure formant un angle pouvant atteindre environ 18 degrés.

4. Prothèse dentaire (10) selon l'une quelconque des revendications précédentes, le profil en T de l'armature d'implant (12) se terminant avant l'extrémité de l'overlay (30).

5. Prothèse dentaire (10) selon la revendication 4, la partie sensiblement horizontale (16) comportant une partie côté lingual (22) comprenant le rebord lingual (25) et une partie côté buccal ou labial (24), le rebord lingual (25) étant sensiblement planaire avec un plan occlusal sur une longueur de l'armature d'implant (12).

6. Prothèse dentaire (10) selon la revendication 5, comprenant en outre une ou plusieurs surfaces de transition tangentielles entre la partie sensiblement horizontale (16) et la partie sensiblement verticale et/ou entre une face linguale de la partie verticale et une face buccale ou labiale de la partie verticale.

7. Prothèse dentaire (10) selon l'une quelconque des revendications précédentes, comprenant en outre une ou plusieurs formations (14) pour assurer ou faciliter la fixation à une partie de la mâchoire du patient.

8. Procédé de conception, à l'aide de données numériques, d'une prothèse dentaire en deux parties comprenant une armature d'implant (12) et un overlay (30), l'armature d'implant (12) étant destinée à être implantée dans la bouche d'un patient et fixée à de multiples emplacements d'implant, et l'overlay (30) étant destiné à remplacer de multiples dents et une structure tissulaire associée, le procédé comprenant :
la génération d'un premier fichier de données numériques représentant une forme de l'armature d'implant (12), définie en partie par les positions d'emplacements d'implant prescrits et en partie par un profil d'emboîtement d'overlay protubérant, la forme de l'armature d'implant (12) étant sélectionnée au moins en partie parmi une ou plusieurs formes enregistrées, l'armature d'implant (12) prenant la forme d'une barre arquée et prenant, en coupe transversale, la forme d'un profil en T inversé, le profil en T inversé étant pourvu d'une partie sensiblement horizontale (16) s'étendant dans une direction transversale et d'une partie sensiblement verticale (18) s'étendant généralement perpendiculairement à celle-ci, la partie sensiblement horizontale (16) comprenant un rebord lingual (25) qui fournit un rebord de réception pour l'overlay (30) lorsque celui-ci est ajusté sur l'armature d'implant (12), la partie sensiblement verticale (18) comprenant un bord occlusal avant dans une partie antérieure de l'armature d'implant, qui supporte au moins une partie de l'overlay (30), et le bord occlusal avant étant pourvu d'une inclinaison antérieure formant un angle pouvant atteindre environ 30 degrés avec le rebord lingual (25) ; la génération d'un deuxième fichier de données numériques, à savoir d'un fichier de données numériques dentaire représentant une forme pour les multiples dents, définie en partie par une table occlusale, ladite table occlusale définissant la position des dents requises ;
la génération d'un troisième fichier de données numériques, à savoir d'un fichier de données numériques tissulaire représentant une forme pour la structure tissulaire associée, définie en partie par ladite forme pour les multiples dents et en partie par un profil de cavité d'emboîtement d'armature doté d'une forme complémentaire de celle dudit profil d'emboîtement d'overlay, la forme de la structure tissulaire étant sélectionnée au moins en partie parmi une ou plusieurs formes enregistrées ;
la modification dudit premier et/ou dudit troisième fichier de données numériques de sorte que le troisième fichier de données numériques définisse une épaisseur minimale prescrite de matériau dans ladite structure tissulaire associée autour de la totalité dudit profil de cavité d'emboîtement d'armature, sans affecter sensiblement lesdites positions d'emplacements d'implant prescrits ; et
l'utilisation de la conception obtenue pour la fabrication de ladite armature d'implant (12) et dudit overlay (30) conformément au(x)dit(s) fichier(s) de données révisé(s) en vue de leur introduction et de leur implantation dans la bouche d'un patient, l'overlay (30) étant fixé à ladite armature d'implant (12) par emboîtement mutuel dudit profil d'emboîtement d'overlay et dudit profil d'emboîtement d'armature et étant, lors de l'utilisation, solidarisé à l'armature d'implant (12) par un ciment dentaire ou une colle dentaire.

9. Procédé selon la revendication 8, ladite modification comportant également la modification dudit deuxième fichier de données numériques, sans affecter sensiblement la position de ladite table occlusale.

10. Procédé selon la revendication 8 et la revendication 9, lesdits deuxième et troisième fichiers de données numériques étant fournis dans un seul fichier de données combiné représentant la forme complète dudit overlay (30) .

11. Support lisible par ordinateur comprenant des instructions qui, lorsqu'elles sont exécutées par un ordinateur, amènent l'ordinateur à mettre en oeuvre les étapes suivantes :
la génération d'un premier fichier de données numériques représentant la forme d'une armature d'implant (12), l'armature d'implant (12) formant une première partie d'une prothèse dentaire en deux parties, l'armature étant destinée à être implantée dans la bouche d'un patient, l'armature d'implant étant définie en partie par les positions d'emplacements d'implant prescrits et en partie par un profil d'emboîtement d'overlay protubérant, la forme de l'armature d'implant (12) étant sélectionnée au moins en partie parmi une ou plusieurs formes enregistrées, l'armature d'implant (12) prenant la forme d'une barre arquée et prenant, en coupe transversale, la forme d'un profil en T inversé, le profil en T inversé étant pourvu d'une partie sensiblement horizontale (16) s'étendant dans une direction transversale et d'une partie sensiblement verticale (18) s'étendant généralement perpendiculairement à celle-ci, la partie sensiblement horizontale (16) comprenant un rebord lingual (25) qui fournit un rebord de réception pour l'overlay (30) lorsque celui-ci est ajusté sur l'armature d'implant (12), la partie sensiblement verticale (18) comprenant un bord occlusal avant dans une partie antérieure de l'armature d'implant, qui supporte au moins une partie de l'overlay (30), et le bord occlusal avant étant pourvu d'une inclinaison antérieure formant un angle pouvant atteindre environ 30 degrés avec le rebord lingual (25) ;
la génération d'un deuxième fichier de données numériques, à savoir d'un fichier de données numériques dentaire représentant une forme pour de multiples dents, les multiples dents faisant partie d'un overlay (30), l'overlay (30) étant compris dans une deuxième partie de ladite prothèse dentaire en deux parties, les multiples dents étant définies en partie par une table occlusale, la table occlusale définissant la position des dents requises et, lors de l'utilisation, l'overlay (30) étant solidarisé à l'armature d'implant (12) par un ciment dentaire ou une colle dentaire ;
la génération d'un troisième fichier de données numériques, à savoir d'un fichier de données numériques tissulaire représentant une forme pour une structure tissulaire associée auxdites multiples dents, ladite structure tissulaire faisant partie dudit overlay (30) et étant définie en partie par ladite forme pour les multiples dents et en partie par un profil de cavité d'emboîtement d'armature doté d'une forme complémentaire de celle dudit profil d'emboîtement d'overlay, la forme de la structure tissulaire étant sélectionnée au moins en partie parmi une ou plusieurs formes enregistrées ; et
modifier ledit premier et/ou ledit troisième fichier de données numériques de sorte que le troisième fichier de données numériques définisse une épaisseur minimale prescrite de matériau dans ladite structure tissulaire associée autour de la totalité dudit profil de cavité d'emboîtement d'armature, sans affecter sensiblement lesdites positions d'emplacements d'implant prescrits, pour ainsi produire un ensemble final de données numériques définissant la prothèse dentaire en deux parties.

12. Support lisible par ordinateur selon la revendication 11, ladite étape de modification comportant également la modification dudit deuxième fichier de données numériques, sans affecter sensiblement la position de ladite table occlusale.

13. Support lisible par ordinateur selon la revendication 11 ou la revendication 12, ladite étape de génération des deuxième et troisième fichiers de données numériques étant combinée pour générer un seul fichier de données combiné représentant la forme complète de l'overlay (30).
